# EUROPEAN PATENT APPLICATION

(11) **EP 4 845 279 A1**
(43) Date of publication of application: **25.11.2026**
(21) Application number: 25747653.1
(22) Date of filing: 21.01.2025
(51) Int. Cl.: H04W 72/232

(54) **CROSS-RADIO ACCESS TECHNOLOGY CELL MANAGEMENT METHOD AND COMMUNICATION APPARATUS**

(30) Priority: 31.01.2024 CN 202410157244
(71) Applicant: Huawei Technologies Co., Ltd., Shenzhen, Guangdong 518129 (CN)
(72) Inventor: LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: Huawei European IPR
(86) International application number: PCT/CN2025/073700
(87) International publication number: WO 2025/162081

(57) **Abstract**

This application provides an inter-radio access technology cell management method and a communication apparatus. The method includes: receiving MAC CE signaling in a first cell of a first RAT; and managing at least one second cell of a second RAT based on the MAC CE signaling. By using lower layer (that is, MAC layer) signaling to perform inter-RAT cell management, this solution can reduce a delay and power consumption compared with using RRC signaling to perform inter-RAT cell management, thereby improving user experience.

## Description

### CROSS-REFERENCE TO RELATED APPLICATIONS

This application claims priority to Chinese Patent Application No. 202410157244.4, filed with the China National Intellectual Property Administration on January 31, 2024 and entitled "INTER-RADIO ACCESS TECHNOLOGY CELL MANAGEMENT METHOD AND COMMUNICATION APPARATUS", which is incorporated herein by reference in its entirety.

### TECHNICAL FIELD

This application relates to the field of wireless communication technologies, and in particular, to an inter-radio access technology cell management method and a communication apparatus.

### BACKGROUND

In a multi-radio access technology (radio access technology, RAT) dual connectivity (dual connectivity, DC) technology, addition of a secondary network device is initiated by a primary network device. The primary network device notifies the secondary network device of necessary information, so that the secondary network device can provide network resources for a terminal device. The primary network device further sends radio resource control (radio resource control, RRC) connection reconfiguration signaling to the terminal device, so that the terminal device adds the secondary network device based on the signaling.

After the secondary network device is added, cells of the secondary network device may be controlled by using RRC signaling of the primary network device. However, this manner causes a high delay and large power consumption, and how to reduce the delay and power consumption needs to be addressed.

### SUMMARY

Embodiments of this application provide an inter-radio access technology cell management method and a communication apparatus, to reduce a delay and power consumption.

According to a first aspect, an embodiment of this application provides a communication method. The method may be performed by a terminal device or a module (for example, a chip) of the terminal device. The method includes: receiving medium access control control element (medium access control control element, MAC CE) signaling in a first cell of a first RAT; and managing at least one second cell of a second RAT based on the MAC CE signaling.

By using lower layer (that is, MAC layer) signaling to perform inter-RAT cell management, the foregoing solution can reduce a delay and power consumption compared with using RRC signaling to perform inter-RAT cell management, thereby improving user experience.

In a possible implementation method, the managing the at least one second cell of the second RAT based on the MAC CE signaling includes: activating or deactivating the at least one second cell of the second RAT based on the MAC CE signaling.

In a possible implementation method, a MAC sub-header of the MAC CE signaling includes a first field, and the first field includes a logical channel identifier (logical channel identifier, LCID) field. When the LCID field is set to a first value, the LCID field indicates to activate or deactivate the at least one second cell of the second RAT.

In the foregoing solution, a meaning of a field of the existing MAC CE signaling is extended, and no new MAC CE signaling needs to be added, so that signaling overheads can be reduced.

In a possible implementation method, a MAC sub-header of the MAC CE signaling includes a second field, and the second field includes an LCID field and an enhanced logical channel identifier (enhanced logical channel identifier, eLCID) field. When the LCID field is set to a first value and the eLCID field is set to a second value, the LCID field and the eLCID field indicate to activate or deactivate the at least one second cell of the second RAT.

In the foregoing solution, a meaning of a field of the existing MAC CE signaling is extended, and no new MAC CE signaling needs to be added, so that signaling overheads can be reduced.

In a possible implementation method, the MAC CE signaling includes a third field, the third field indicates to activate or deactivate the at least one second cell of the second RAT, and the second cell is a primary secondary cell.

In the foregoing solution, a meaning of a field of the existing MAC CE signaling is extended, and no new MAC CE signaling needs to be added, so that signaling overheads can be reduced.

In a possible implementation method, the third field includes N bits, N is a positive integer, the N bits indicate to activate or deactivate N primary secondary cells of the second RAT, and the N bits are in one-to-one correspondence with the N primary secondary cells.

According to a second aspect, an embodiment of this application provides a communication method. The method may be performed by a network device or a module (for example, a chip) of the network device. The method includes: determining MAC CE signaling, where the MAC CE signaling indicates to manage at least one second cell of a second RAT; and sending the MAC CE signaling in a first cell of a first RAT.

By using lower layer (that is, MAC layer) signaling to perform inter-RAT cell management, the foregoing solution can reduce a delay and power consumption compared with using RRC signaling to perform inter-RAT cell management, thereby improving user experience.

In a possible implementation method, the MAC CE signaling indicates to activate or deactivate the at least one second cell of the second RAT.

In a possible implementation method, a MAC sub-header of the MAC CE signaling includes a first field, and the first field includes an LCID field. When the LCID field is set to a first value, the LCID field indicates to activate or deactivate the at least one second cell of the second RAT.

In the foregoing solution, a meaning of a field of the existing MAC CE signaling is extended, and no new MAC CE signaling needs to be added, so that signaling overheads can be reduced.

In a possible implementation method, a MAC sub-header of the MAC CE signaling includes a second field, and the second field includes an LCID field and an eLCID field. When the LCID field is set to a first value and the eLCID field is set to a second value, the LCID field and the eLCID field indicate to activate or deactivate the at least one second cell of the second RAT.

In the foregoing solution, a meaning of a field of the existing MAC CE signaling is extended, and no new MAC CE signaling needs to be added, so that signaling overheads can be reduced.

In a possible implementation method, the MAC CE signaling includes a third field, the third field indicates to activate or deactivate the at least one second cell of the second RAT, and the second cell is a primary secondary cell.

In the foregoing solution, a meaning of a field of the existing MAC CE signaling is extended, and no new MAC CE signaling needs to be added, so that signaling overheads can be reduced.

In a possible implementation method, the third field includes N bits, N is a positive integer, the N bits indicate to activate or deactivate N primary secondary cells of the second RAT, and the N bits are in one-to-one correspondence with the N primary secondary cells.

According to a third aspect, an embodiment of this application provides a communication method. The method may be performed by a terminal device or a module (for example, a chip) of the terminal device. The method includes: receiving physical (physical, PHY) layer signaling in a first cell of a first RAT, where the PHY layer signaling includes scheduling information, and the scheduling information is used to perform physical uplink shared channel (physical uplink shared channel, PUSCH) scheduling and/or physical downlink shared channel (physical downlink shared channel, PDSCH) scheduling on at least one second cell of a second RAT; and obtaining the scheduling information based on the PHY layer signaling.

Alternatively, it is understood as that the scheduling information is used to perform uplink carrier PUSCH scheduling and/or downlink carrier PDSCH scheduling on the at least one second cell of the second RAT.

By using lower layer (that is, PHY layer) signaling to perform inter-RAT cell scheduling, the foregoing solution can reduce a delay and power consumption compared with using RRC signaling to perform inter-RAT cell scheduling, thereby improving user experience.

In a possible implementation method, the PHY layer signaling is downlink control information (downlink control information, DCI) signaling of the first RAT, where the DCI signaling includes the scheduling information.

In a possible implementation method, the PHY layer signaling is DCI signaling of the first RAT, where the DCI signaling is scrambled by using a radio network temporary identifier (radio network temporary identifier, RNTI) of the second RAT.

In a possible implementation method, the PHY layer signaling is DCI signaling of the first RAT, where the DCI signaling of the first RAT includes DCI signaling of the second RAT, and the DCI signaling of the second RAT includes the scheduling information.

According to a fourth aspect, an embodiment of this application provides a communication method. The method may be performed by a network device or a module (for example, a chip) of the network device. The method includes: determining PHY layer signaling, where the PHY layer signaling includes scheduling information, and the scheduling information is used to perform PUSCH scheduling and/or PDSCH scheduling on at least one second cell of a second RAT; and sending the PHY layer signaling in a first cell of a first RAT.

By using lower layer (that is, PHY layer) signaling to perform inter-RAT cell scheduling, the foregoing solution can reduce a delay and power consumption compared with using RRC signaling to perform inter-RAT cell scheduling, thereby improving user experience.

In a possible implementation method, the PHY layer signaling is DCI signaling of the first RAT, where the DCI signaling includes the scheduling information.

In a possible implementation method, the PHY layer signaling is DCI signaling of the first RAT, where the DCI signaling is scrambled by using an RNTI of the second RAT.

In a possible implementation method, the PHY layer signaling is DCI signaling of the first RAT, where the DCI signaling of the first RAT includes DCI signaling of the second RAT, and the DCI signaling of the second RAT includes the scheduling information.

According to a fifth aspect, an embodiment of this application provides a communication method. The method may be performed by a terminal device or a module (for example, a chip) of the terminal device. The method includes: determining PHY layer signaling, where the PHY layer signaling indicates PHY layer information, and the PHY layer information corresponds to at least one second cell of a second RAT; and sending the PHY layer signaling in a first cell of a first RAT.

By using lower layer (that is, PHY layer) signaling to perform inter-RAT information sending, the foregoing solution can reduce a delay and power consumption compared with using RRC signaling to perform inter-RAT information sending, thereby improving user experience.

In a possible implementation method, the PHY layer signaling is uplink control information (uplink control information, UCI) signaling of the first RAT, where the UCI signaling of the first RAT indicates the PHY layer information.

In a possible implementation method, the PHY layer information includes one or more pieces of the following information: a scheduling request, a hybrid automatic repeat request (hybrid automatic repeat request, HARQ) acknowledgment (ACK), a HARQ negative acknowledgment (NACK), or channel state information (channel state information, CSI).

According to a sixth aspect, an embodiment of this application provides a communication method. The method may be performed by a network device or a module (for example, a chip) of the network device. The method includes: receiving PHY layer signaling in a first cell of a first RAT, where the PHY layer signaling indicates PHY layer information, and the PHY layer information corresponds to at least one second cell of a second RAT; and obtaining the PHY layer information based on the PHY layer signaling.

By using lower layer (that is, PHY layer) signaling to perform inter-RAT information sending, the foregoing solution can reduce a delay and power consumption compared with using RRC signaling to perform inter-RAT information sending, thereby improving user experience.

In a possible implementation method, the PHY layer signaling is UCI signaling of the first RAT, where the UCI signaling of the first RAT indicates the PHY layer information.

In a possible implementation method, the PHY layer information includes one or more pieces of the following information: a scheduling request, a HARQ ACK, a HARQ NACK, or CSI.

According to a seventh aspect, an embodiment of this application provides a communication apparatus. The apparatus may be a terminal device or a module (for example, a chip) of the terminal device. The apparatus has a function of implementing any implementation method of the first aspect, the third aspect, or the fifth aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a network device, or may be a module (for example, a chip) of the network device. The apparatus has a function of implementing any implementation method of the second aspect, the fourth aspect, or the sixth aspect. The function may be implemented by hardware, or may be implemented by hardware executing corresponding software. The hardware or the software includes one or more modules corresponding to the function.

According to a ninth aspect, an embodiment of this application provides a communication apparatus, including a unit or a means (means) configured to perform steps in any one of the implementation methods of the first aspect to the sixth aspect.

According to a tenth aspect, an embodiment of this application provides a communication apparatus, including a processor and an interface circuit. The processor is configured to: communicate with another apparatus through the interface circuit, and perform any one of the implementation methods in the first aspect to the sixth aspect. There are one or more processors.

Optionally, the communication apparatus may further include a memory configured to store computer instructions. The memory is coupled to the processor, and the processor executes the computer instructions stored in the memory, to cause the apparatus to perform any one of the implementation methods of the first aspect to the sixth aspect.

According to an eleventh aspect, an embodiment of this application further provides a computer program product. The computer program product includes a computer program or instructions, and when the computer program or instructions are run by a communication apparatus, any one of the implementation methods according to the first aspect to the sixth aspect is performed.

According to a twelfth aspect, an embodiment of this application further provides a computer-readable storage medium. The computer-readable storage medium stores instructions, and when the instructions are run on a communication apparatus, any one of the implementation methods in the first aspect is performed.

According to a thirteenth aspect, an embodiment of this application further provides a chip system, including a processor, configured to perform any one of the implementation methods according to the first aspect to the sixth aspect.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is an example diagram of an MCG and an SCG;
FIG. 3 is a diagram of multi-RAT DC in NSA networking;
FIG. 4 to FIG. 6 are schematic flowcharts of a communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

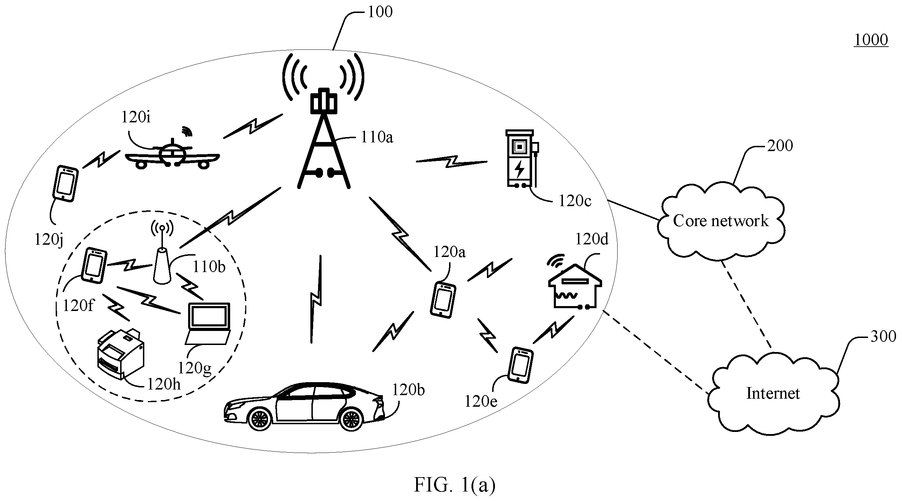

FIG. 1(a) is a diagram of an architecture of a communication system to which an embodiment of this application is applied. The communication system 1000 shown in FIG. 1(a) includes a radio access network 100 and a core network 200. Optionally, the communication system 1000 further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. The core network device and the network device may be different physical devices independent of each other, or functions of the core network device and logical functions of the network device may be integrated into a same physical device, or some functions of the core network device and some functions of the network device may be integrated into one physical device. Terminal devices may be connected to each other and network devices may be connected to each other in a wired or wireless manner. FIG. 1(a) is merely a diagram. The communication system may further include other network devices, for example, may further include a wireless relay device and a wireless backhaul device, which are not shown in FIG. 1(a).

The network device is an access device through which the terminal device accesses the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), a distributed unit (distributed unit, DU), or radio unit (radio unit, RU). The network device may be a macro base station (for example, 110a in FIG. 1(a)), a micro base station or an indoor base station (for example, 110b in FIG. 1(a)), or a relay node, a donor node, or the like. A specific technology and a specific device form used by the network device are not limited in embodiments of this application.

The terminal device is a device having a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer having a wireless transceiver function, a wearable device, a vehicle, an airplane, a ship, a robot, a robotic arm, a smart home device, or the like. A specific technology and a specific device form used by the terminal device are not limited in embodiments of this application.

The network device and the terminal device may be at fixed locations, or may be movable. The network device and the terminal device may be deployed on land, including being deployed indoors or outdoors, or in a handheld manner or a vehicle-mounted manner; may be deployed on water; or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device. For the terminal device 120j that accesses the radio access network 100 through 120i, the terminal device 120i is a network device. However, for the network device 110a, 120i is a terminal device, in other words, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1(a) may be referred to as communication apparatuses having functions of the network device, and 120a to 120j in FIG. 1(a) may be referred to as communication apparatuses having functions of the terminal device.

Communication between the network device and the terminal device, between network devices, or between terminal devices may be performed by using a licensed spectrum, an unlicensed spectrum, or both the licensed spectrum and the unlicensed spectrum; or may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) of the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) of the terminal device, or may be performed by an apparatus including a function of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection with a cell controlled by the network device. A cell that establishes the wireless connection to the terminal device is referred to as a serving cell of the terminal device.

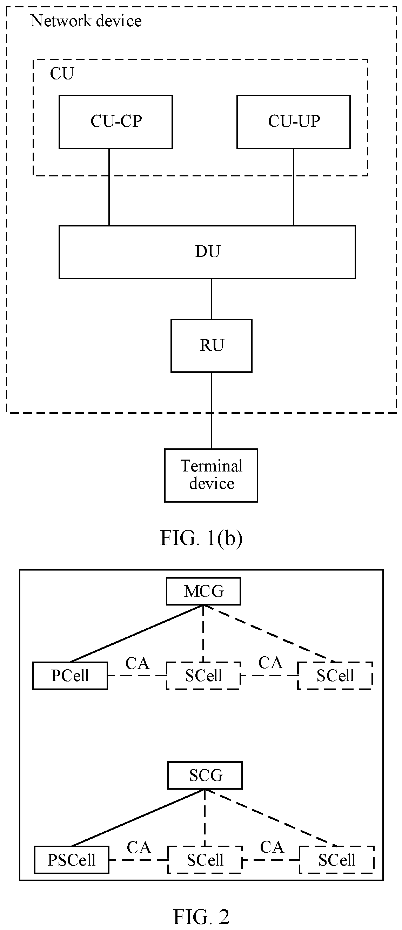

FIG. 1(b) is a diagram of a network device. As shown in FIG. 1(b), the network device includes one or more CUs, one or more DUs, and one or more RUs. For clarity, FIG. 1(b) shows only one CU, one DU, and one RU. The CU is configured to connect to a core network and the one or more DUs. Optionally, the CU may have a part of functions of the core network. The CU may include a CU-control plane (control plane, CP) and a CU-user plane (user plane, UP).

The CU and the DU may be configured based on functions of protocol layers of a wireless network that are implemented by the CU and the DU. For example, the CU is configured to implement functions of a packet data convergence protocol (packet data convergence protocol, PDCP) layer and a protocol layer above the PDCP layer (for example, an RRC layer and/or a service data adaptation protocol (service data adaptation protocol, SDAP) layer), and the DU is configured to implement functions of a protocol layer below the PDCP layer (for example, a radio link control (radio link control, RLC) layer, a medium access control (medium access control, MAC) layer, and/or a PHY layer). For another example, the CU is alternatively configured to implement functions of the protocol layer above the PDCP layer (for example, the RRC layer and/or the SDAP layer), and the DU is configured to implement functions of the PDCP layer and the protocol layer below the PDCP layer (for example, the RLC layer, the MAC layer, and/or the PHY layer).

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may alternatively be performed based on service types or other system requirements. For example, division may be performed based on delay. Functions whose processing time needs to meet small delay are set on the DU, and functions whose processing time does not need to meet the delay are set on the CU.

The DU and the RU may cooperate to jointly implement functions of the PHY layer. One DU may be connected to one or more RUs. Functions of the DU and the RU may be configured in a plurality of manners according to a design. For example, the DU is configured to implement a baseband function, and the RU is configured to implement an intermediate frequency/radio frequency function. For another example, the DU is configured to implement a higher layer function of the PHY layer, and the RU is configured to: implement a lower layer function of the PHY layer, or implement the lower layer function and a radio frequency function. The higher layer function of the physical layer may include a part of functions of the physical layer, and the part of functions are closer to the MAC layer. The lower layer function of the physical layer may include another part of functions of the physical layer, and the part of functions are closer to an intermediate frequency/radio frequency side.

The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may have different names, but a person skilled in the art may understand meanings thereof. For example, in an open radio access network (open radio access network, ORAN) system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented by using a software module, a hardware module, or a combination of a software module and a hardware module.

For ease of description, in embodiments of this application, an example in which the UE and the base station are respectively used as a terminal device and a network device is used for description. Therefore, the UE and the base station that appear in any subsequent place may be respectively replaced with the terminal device and the network device.

As mobile communication systems develop, the systems can provide increasingly high quality of service. To maintain the long-term competitive advantages of the 3rd generation partnership project (3rd generation partnership project, 3GPP) and further improve spectral efficiency and user throughputs of the systems, carrier aggregation (carrier aggregation, CA) is introduced. Carrier aggregation means that the UE can simultaneously use carriers of a plurality of cells to perform uplink and downlink communication, thereby supporting high-speed data transmission. In the plurality of cells, one cell is a primary cell (primary cell, PCell), and the remaining cells are secondary cells (secondary cell, SCell).

Carrier aggregation is classified into intra-base station cell aggregation and inter-base station cell aggregation. The intra-base station cell aggregation means that for the UE, aggregated serving cells all belong to a same base station. The inter-base station cell aggregation is also referred to as DC, and means that carrier aggregation is supported for a plurality of cells of two base stations, to bring better user experience to users. For the UE, one base station is a master base station, and the other base station is a secondary base station. Concepts of a master cell group (master cell group, MCG) and a secondary cell group (secondary cell group, SCG) are introduced in the DC. FIG. 2 is an example diagram of an MCG and an SCG. The MCG includes a group of serving cells associated with a master base station, and the MCG includes one or more secondary cells (SCell) that may exist and one primary cell (PCell). The SCG includes a group of serving cells associated with a secondary base station, and the SCG includes one or more SCells that may exist and one primary secondary cell (primary secondary cell, PSCell).

From an overall architectural perspective, 5G networking is mainly classified into two modes: non-standalone (Non-Standalone, NSA) networking and standalone (Standalone, SA) networking. In the NSA, a 5G base station is connected to a 4G base station, and a 4G core network is used to provide services for UE. In the SA, a 5G core network is newly deployed, and a 5G base station directly uses the 5G core network to provide services for the UE.

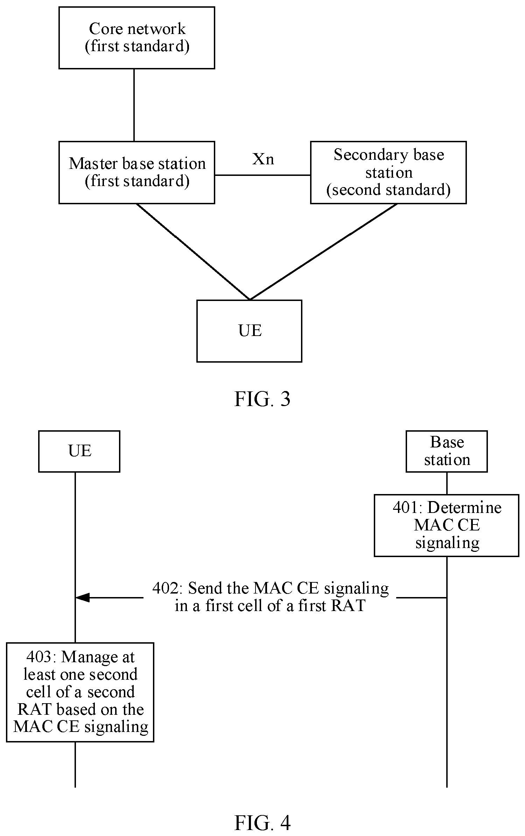

FIG. 3 is a diagram of multi-RAT DC in NSA networking. A RAT used by a master base station is a first RAT, and a RAT used by a secondary base station is a second RAT. For example, the first RAT is a 4G RAT, and the second RAT is a 5G RAT, which is also referred to as new radio (new radio, NR); or the first RAT is NR, and the second RAT is a 6th generation (6th generation, 6G) RAT; or the first RAT is a 6G RAT, and the second RAT is a 7th generation (7th generation, 7G) RAT; or the first RAT is NR, and the second RAT is a 4G RAT; or the first RAT is a 6G RAT, and the second RAT is NR; or the first RAT is a 7G RAT, and the second RAT is a 6G RAT. The first RAT and the second RAT are not limited in this application.

Currently, in a multi-RAT DC technology, addition of a secondary base station is initiated by a master base station. The master base station notifies the secondary base station of necessary information, so that the secondary base station can provide network resources for UE. The master base station further sends RRC connection reconfiguration signaling to the UE, so that the UE adds the secondary base station based on the signaling. After the secondary base station is added, cells of the secondary base station may be controlled by using RRC signaling of the master base station. However, MAC layers of the master base station and the secondary base station are independent of each other, and PHY layers of the master base station and the secondary base station are also independent of each other. That is, the cells of the secondary base station can be controlled neither by using the MAC layer of the master base station nor the PHY layer of the master base station, increasing a delay of managing the secondary base station by the master base station as well as power consumption. Controlling the cell of the secondary base station may be understood as controlling an uplink carrier and/or a downlink carrier of the cell of the secondary base station.

To resolve this problem, this application provides corresponding embodiments. The following provides detailed descriptions.

FIG. 4 is a schematic flowchart of a communication method according to an embodiment of this application. The method is performed by a base station or a module (for example, a chip) of the base station, and UE or a module (for example, a chip) of the UE. The following uses an example in which the base station and the UE perform the method for description.

The method includes the following steps.

Step 401: The base station determines MAC CE signaling.

For example, the base station may be the master base station in the example in FIG. 3.

The MAC CE signaling is MAC layer signaling of a first RAT. The MAC CE signaling indicates to manage at least one second cell of a second RAT. For example, the MAC CE signaling specifically indicates to activate or deactivate the at least one second cell of the second RAT. That is, the foregoing "manage" may refer to "activate or deactivate ". Certainly, a specific type of management is not limited in this application, and in actual practice, the management may alternatively be another type of management.

In an implementation method, the master base station receives MAC layer information of the second RAT from a secondary base station, where the MAC layer information indicates to manage the at least one second cell of the second RAT; and then the master base station determines the MAC CE signaling of the first RAT based on the MAC layer information.

In an implementation method, a MAC sub-header of the MAC CE signaling includes a first field, and the first field includes an LCID field. When the LCID field is set to a first value, the LCID field indicates to activate or deactivate the at least one second cell of the second RAT. For example, when a value of the LCID field is 35 or 36, the LCID field indicates to activate or deactivate the at least one second cell of the second RAT.

In an implementation method, a MAC sub-header of the MAC CE signaling includes a second field, and the second field includes an LCID field and an eLCID field. When the LCID field is set to a first value and the eLCID field is set to a second value, the LCID field and the eLCID field indicate to activate or deactivate the at least one second cell of the second RAT. For example, when a value of the LCID field is 34, and a value of the eLCID field is 216, the LCID field and the eLCID field indicate to activate or deactivate the at least one second cell of the second RAT.

In another implementation method, the MAC CE signaling includes a third field, the third field may be a field in a message body (body) in the MAC CE signaling, and the message body is used to carry data. The third field indicates to activate or deactivate the at least one second cell of the second RAT, where the second cell may be a primary secondary cell, or may be a secondary cell. That is, the MAC CE signaling indicates to activate or deactivate at least one primary secondary cell of the second RAT. For example, the third field includes N bits, N is a positive integer, the N bits indicate to activate or deactivate N primary secondary cells of the second RAT, and the N bits are in one-to-one correspondence with the N primary secondary cells. For example, for any one of the N bits, if a value of the bit is a, the bit indicates to activate a primary secondary cell corresponding to the bit; and if a value of the bit is b, the bit indicates to deactivate a primary secondary cell corresponding to the bit, where a is 0, and b is 1; or a is 1, and b is 0.

Step 402: The base station sends the MAC CE signaling in a first cell of the first RAT, and correspondingly, the UE receives the MAC CE signaling in the first cell of the first RAT.

For example, the base station may send the MAC CE signaling in a unicast, multicast, or broadcast manner.

That the base station sends the MAC CE signaling in the first cell of the first RAT may also be referred to as that the base station sends the MAC CE signaling on a first carrier of the first RAT, where the first carrier is a carrier of the first cell.

Step 403: The UE manages the at least one second cell of the second RAT based on the MAC CE signaling.

For example, the UE activates the at least one second cell of the second RAT or deactivates the at least one second cell of the second RAT based on the MAC CE signaling. The second cell may be a primary secondary cell of the secondary base station.

By using lower layer (that is, MAC layer) signaling to perform inter-RAT cell management, the foregoing solution can reduce a delay and power consumption compared with using RRC signaling to perform inter-RAT cell management, thereby improving user experience.

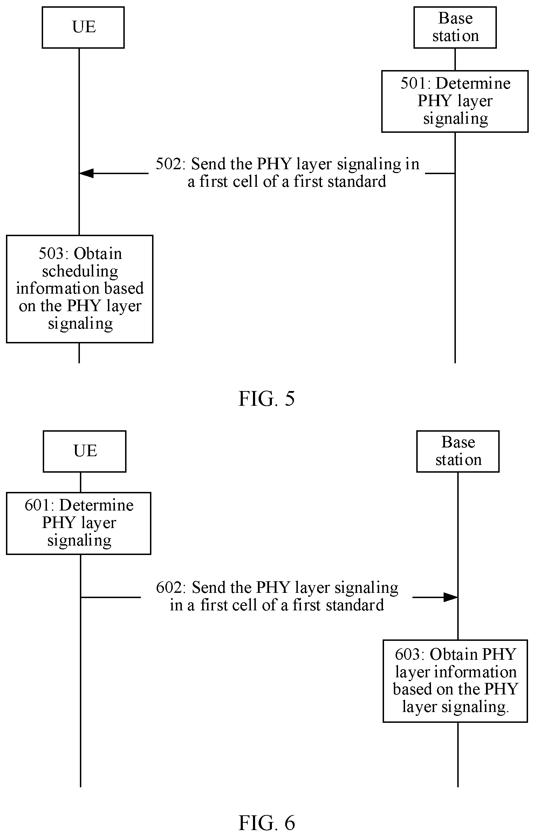

FIG. 5 is a schematic flowchart of a communication method according to an embodiment of this application. The method is performed by a base station or a module (for example, a chip) of the base station, and UE or a module (for example, a chip) of the UE. The following uses an example in which the base station and the UE perform the method for description.

The method includes the following steps.

Step 501: The base station determines PHY layer signaling.

For example, the base station may be the master base station in the example in FIG. 3.

The PHY layer signaling is PHY layer signaling of a first RAT. The PHY layer signaling includes scheduling information, where the scheduling information is used to perform PUSCH scheduling and/or PDSCH scheduling on at least one second cell of a second RAT. Alternatively, it is understood as that the scheduling information is used to perform uplink carrier PUSCH scheduling and/or downlink carrier PDSCH scheduling on the at least one second cell of the second RAT.

The second cell herein may be a primary secondary cell or a secondary cell of a secondary base station.

In an implementation method, the master base station receives scheduling information of the second RAT from the secondary base station, and then the master base station determines the PHY layer signaling of the first RAT based on the scheduling information.

The following describes three different implementation methods of the PHY layer signaling.

Implementation method 1: The PHY layer signaling is DCI signaling of the first RAT, where the DCI signaling includes the scheduling information.

For the implementation method 1, a new DCI format of the first RAT may be defined, and DCI signaling of the new DCI format of the first RAT is used to schedule the scheduling information of the second RAT.

Implementation method 2: The PHY layer signaling is DCI signaling of the first RAT or the second RAT, the DCI signaling is scrambled by using an RNTI of the second RAT, and the DCI signaling includes the scheduling information.

For the implementation method 2, a new RNTI (that is, the RNTI of the second RAT) is used to scramble the DCI signaling of the first RAT or the second RAT. For example, if the DCI signaling is of a DCI format of the second RAT, the DCI format of the second RAT is, for example, DCI format1_5.

Implementation method 3: The PHY layer signaling is DCI signaling of the first RAT, the DCI signaling of the first RAT includes DCI signaling of the second RAT, and the DCI signaling of the second RAT includes the scheduling information.

For the implementation method 3, the DCI signaling of the second RAT is carried in the DCI signaling of the first RAT. The UE first parses the DCI signaling of the first RAT to obtain the DCI signaling of the second RAT, parses the DCI signaling of the second RAT, and obtains the scheduling information based on the DCI signaling of the second RAT.

For example, the DCI format of the DCI signaling of the first RAT may be an existing DCI format, or may be a newly defined DCI format.

Step 502: The base station sends the PHY layer signaling in a first cell of the first RAT, and correspondingly, the UE receives the PHY layer signaling in the first cell of the first RAT.

For example, the base station may send the PHY layer signaling in a unicast, multicast, or broadcast manner.

That the base station sends the PHY layer signaling in the first cell of the first RAT may also be referred to as that the base station sends the PHY layer signaling on a first carrier of the first RAT, where the first carrier is a carrier of the first cell.

Step 503: The UE obtains the scheduling information based on the PHY layer signaling.

For example, the UE obtains the scheduling information based on the PHY layer signaling, and performs PUSCH transmission and/or PDSCH transmission based on the scheduling information.

By using lower layer (that is, PHY layer) signaling to perform inter-RAT cell scheduling, the foregoing solution can reduce a delay and power consumption compared with using RRC signaling to perform inter-RAT cell scheduling, thereby improving user experience.

FIG. 6 is a schematic flowchart of a communication method according to an embodiment of this application. The method is performed by a base station or a module (for example, a chip) of the base station, and UE or a module (for example, a chip) of the UE. The following uses an example in which the base station and the UE perform the method for description.

The method includes the following steps.

Step 601: The UE determines PHY layer signaling.

The PHY layer signaling is PHY layer signaling of a first RAT. The PHY layer signaling indicates PHY layer information of a second RAT, and the PHY layer information of the second RAT corresponds to at least one second cell of the second RAT. The second cell may be a cell (for example, a primary secondary cell or a secondary cell) of a secondary base station.

For example, the PHY layer signaling is UCI signaling of a first RAT, and the UCI signaling of the first RAT indicates the PHY layer information of the second RAT.

In an implementation method, a format of the UCI may be a newly added format. Based on this, the PHY layer information of the second RAT may be added to the UCI corresponding to the newly added format. The PHY layer information includes, for example, at least one piece of the following information: a scheduling request of the second RAT, a HARQ acknowledgment (ACK) of the second RAT, a HARQ negative acknowledgment (NACK) of the second RAT, or CSI of the second RAT. The CSI may include at least one of a channel quality indicator, a precoding matrix indicator, a rank indicator, a layer indicator, or a channel state information reference signal resource indicator.

In another implementation method, a format of the UCI may be an existing format. Based on this, the PHY layer information of the second RAT may be additionally added to the UCI corresponding to the existing format, and the PHY layer information of the second RAT may be added following PHY layer information of the first RAT included in the UCI. That is, the UCI includes the PHY layer information of the first RAT and the PHY layer information of the second RAT. The PHY layer information of the first RAT includes at least one piece of the following information: a scheduling request of the first RAT, a HARQ ACK of the first RAT, a HARQ NACK of the first RAT, or CSI of the first RAT. The PHY layer information of the second RAT includes at least one piece of the following information: a scheduling request of the second RAT, a HARQ ACK of the second RAT, a HARQ NACK of the second RAT, or CSI of the second RAT.

Step 602: The UE sends the PHY layer signaling in a first cell of the first RAT, and correspondingly, the base station receives the PHY layer signaling in the first cell of the first RAT.

For example, the base station may be the master base station in the example in FIG. 3.

That the UE sends the PHY layer signaling in the first cell of the first RAT may also be understood as that the UE sends the PHY layer signaling on a first carrier of the first cell of the first RAT.

Step 603: The base station obtains the PHY layer information based on the PHY layer signaling.

For example, when the base station is the master base station, after obtaining the PHY layer information, the master base station may send the PHY layer information to the secondary base station.

By using lower layer (that is, PHY layer) signaling to perform inter-RAT information sending, the foregoing solution can reduce a delay and power consumption compared with using RRC signaling to perform inter-RAT information sending, thereby improving user experience.

It should be noted that the method embodiments in FIG. 4, FIG. 5, and FIG. 6 may be implemented separately, or may be implemented in combination with each other, for example, an embodiment in which the method embodiment in FIG. 4 is combined with the method embodiment in FIG. 6, or an embodiment in which the method embodiment in FIG. 5 is combined with the method embodiment in FIG. 6.

It may be understood that, to implement the functions in the foregoing embodiments, the UE or the base station includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

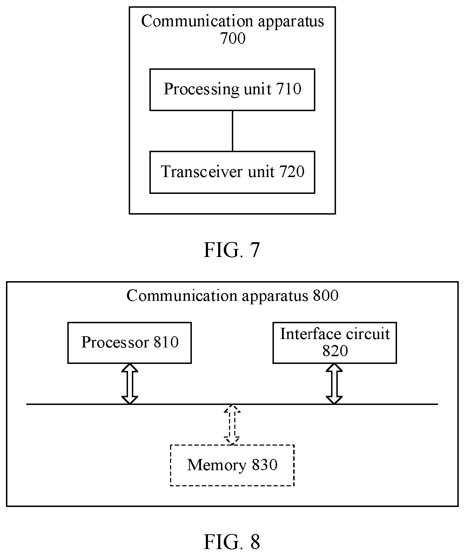

FIG. 7 and FIG. 8 are diagrams of possible structures of communication apparatuses according to embodiments of this application. These communication apparatuses may be configured to implement the functions of the UE or the base station in the foregoing method embodiments, and therefore can also achieve beneficial effect of the foregoing method embodiments. In embodiments of this application, the communication apparatus may be UE or a base station, or may be a module (for example, a chip) applied to the UE or the base station.

The communication apparatus 700 shown in FIG. 7 includes a processing unit 710 and a transceiver unit 720. The communication apparatus 700 is configured to implement functions of the UE or the base station in the foregoing method embodiments.

When the communication apparatus 700 is configured to implement the function of the UE in the method embodiment in FIG. 4, the transceiver unit 720 is configured to receive MAC CE signaling in a first cell of a first RAT; and the processing unit 710 is configured to manage at least one second cell of a second RAT based on the MAC CE signaling.

In a possible implementation method, that the processing unit 710 is configured to manage the at least one second cell of the second RAT based on the MAC CE signaling specifically includes: configured to activate or deactivate the at least one second cell of the second RAT based on the MAC CE signaling.

In a possible implementation method, a MAC sub-header of the MAC CE signaling includes a first field, and the first field includes an LCID field. When the LCID field is set to a first value, the LCID field indicates to activate or deactivate the at least one second cell of the second RAT.

In a possible implementation method, a MAC sub-header of the MAC CE signaling includes a second field, and the second field includes an LCID field and an eLCID field. When the LCID field is set to a first value and the eLCID field is set to a second value, the LCID field and the eLCID field indicate to activate or deactivate the at least one second cell of the second RAT.

In a possible implementation method, the MAC CE signaling includes a third field, the third field indicates to activate or deactivate the at least one second cell of the second RAT, and the second cell is a primary secondary cell.

In a possible implementation method, the third field includes N bits, N is a positive integer, the N bits indicate to activate or deactivate N primary secondary cells of the second RAT, and the N bits are in one-to-one correspondence with the N primary secondary cells.

When the communication apparatus 700 is configured to implement the function of the base station in the method embodiment in FIG. 4, the processing unit 710 is configured to determine the MAC CE signaling, where the MAC CE signaling indicates to manage the at least one second cell of the second RAT; and the transceiver unit 720 is configured to send the MAC CE signaling in the first cell of the first RAT.

In a possible implementation method, the MAC CE signaling indicates to activate or deactivate the at least one second cell of the second RAT.

In a possible implementation method, a MAC sub-header of the MAC CE signaling includes a first field, and the first field includes an LCID field. When the LCID field is set to a first value, the LCID field indicates to activate or deactivate the at least one second cell of the second RAT.

In a possible implementation method, a MAC sub-header of the MAC CE signaling includes a second field, and the second field includes an LCID field and an eLCID field. When the LCID field is set to a first value and the eLCID field is set to a second value, the LCID field and the eLCID field indicate to activate or deactivate the at least one second cell of the second RAT.

In a possible implementation method, the MAC CE signaling includes a third field, the third field indicates to activate or deactivate the at least one second cell of the second RAT, and the second cell is a primary secondary cell.

In a possible implementation method, the third field includes N bits, N is a positive integer, the N bits indicate to activate or deactivate N primary secondary cells of the second RAT, and the N bits are in one-to-one correspondence with the N primary secondary cells.

When the communication apparatus 700 is configured to implement the function of the UE in the method embodiment in FIG. 5, the transceiver unit 720 is configured to receive PHY layer signaling in a first cell of a first RAT, where the PHY layer signaling includes scheduling information, and the scheduling information is used to perform PUSCH scheduling and/or PDSCH scheduling for at least one second cell of a second RAT; and the processing unit 710 is configured to obtain the scheduling information based on the PHY layer signaling.

In a possible implementation method, the PHY layer signaling is DCI signaling of the first RAT, where the DCI signaling includes the scheduling information.

In a possible implementation method, the PHY layer signaling is DCI signaling of the first RAT, where the DCI signaling is scrambled by using an RNTI of the second RAT.

In a possible implementation method, the PHY layer signaling is DCI signaling of the first RAT, where the DCI signaling of the first RAT includes DCI signaling of the second RAT, and the DCI signaling of the second RAT includes the scheduling information.

When the communication apparatus 700 is configured to implement the function of the base station in the method embodiment in FIG. 5, the processing unit 710 is configured to determine PHY layer signaling, where the PHY layer signaling includes scheduling information, and the scheduling information is used to perform PUSCH scheduling and/or PDSCH scheduling for at least one second cell of a second RAT; and the transceiver unit 720 is configured to send the PHY layer signaling in a first cell of a first RAT.

In a possible implementation method, the PHY layer signaling is DCI signaling of the first RAT, where the DCI signaling includes the scheduling information.

In a possible implementation method, the PHY layer signaling is DCI signaling of the first RAT, where the DCI signaling is scrambled by using an RNTI of the second RAT.

In a possible implementation method, the PHY layer signaling is DCI signaling of the first RAT, where the DCI signaling of the first RAT includes DCI signaling of the second RAT, and the DCI signaling of the second RAT includes the scheduling information.

When the communication apparatus 700 is configured to implement the function of the UE in the method embodiment in FIG. 6, the processing unit 710 is configured to determine PHY layer signaling, where the PHY layer signaling indicates PHY layer information, and the PHY layer information corresponds to at least one second cell of a second RAT; and the transceiver unit 720 is configured to send the PHY layer signaling in a first cell of a first RAT.

In a possible implementation method, the PHY layer signaling is UCI signaling of the first RAT, where the UCI signaling of the first RAT indicates the PHY layer information.

In a possible implementation method, the PHY layer information includes one or more pieces of the following information: a scheduling request, a HARQ ACK, a HARQ NACK, or CSI.

When the communication apparatus 700 is configured to implement the function of the base station in the method embodiment in FIG. 6, the transceiver unit 720 is configured to receive PHY layer signaling in a first cell of a first RAT, where the PHY layer signaling indicates PHY layer information, and the PHY layer information corresponds to at least one second cell of a second RAT; and the processing unit 710 is configured to obtain the PHY layer information based on the PHY layer signaling.

In a possible implementation method, the PHY layer signaling is UCI signaling of the first RAT, where the UCI signaling of the first RAT indicates the PHY layer information.

In a possible implementation method, the PHY layer information includes one or more pieces of the following information: a scheduling request, a HARQ ACK, a HARQ NACK, or CSI.

For more detailed descriptions about the processing unit 710 and the transceiver unit 720, directly refer to related descriptions in the foregoing method embodiments. Details are not described herein again.

The communication apparatus 800 shown in FIG. 8 includes a processor 810 and an interface circuit 820. The processor 810 and the interface circuit 820 are coupled to each other. It can be understood that the interface circuit 820 may be a transceiver or an input/output interface. Optionally, the communication apparatus 800 may further include a memory 830, configured to store instructions executed by the processor 810, store input data for the processor 810 to run instructions, or store data generated after the processor 810 runs instructions.

When the communication apparatus 800 is configured to implement the foregoing method embodiments, the processor 810 is configured to implement functions of the foregoing processing unit 710, and the interface circuit 820 is configured to implement functions of the foregoing transceiver unit 720.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instruction may be composed of corresponding software modules. The software modules may be stored in a random access memory, a flash memory, a read-only memory, a programmable read-only memory, an erasable programmable read-only memory, an electrically erasable programmable read-only memory, a register, a hard disk drive, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in UE or a base station. Certainly, the processor and the storage medium may exist in an access network device or a terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. The computer program (computer program) is a set of instructions that indicate each step of an electronic computer or another device having a message processing capability, and is usually written in a program design language and run on a target architecture. When the computer program or instructions are loaded and executed on a computer, all or a part of the procedures or functions in embodiments of this application are performed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and can be mutually referenced, and technical features in different embodiments can be combined to form new embodiments based on their inherent logical relationship.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An inter-radio access technology cell management method, comprising:
receiving medium access control control element MAC CE signaling in a first cell of a first radio access technology RAT; and
managing at least one second cell of a second RAT based on the MAC CE signaling.

2. The method according to claim 1, wherein the managing the at least one second cell of the second RAT based on the MAC CE signaling comprises:
activating or deactivating the at least one second cell of the second RAT based on the MAC CE signaling.

3. The method according to claim 2, wherein a MAC sub-header of the MAC CE signaling comprises a first field, and the first field comprises a logical channel identifier LCID field, wherein
when the LCID field is set to a first value, the LCID field indicates to activate or deactivate the at least one second cell of the second RAT.

4. The method according to claim 2, wherein a MAC sub-header of the MAC CE signaling comprises a second field, and the second field comprises an LCID field and an enhanced logical channel identifier eLCID field, wherein
when the LCID field is set to a first value and the eLCID field is set to a second value, the LCID field and the eLCID field indicate to activate or deactivate the at least one second cell of the second RAT.

5. The method according to any one of claims 1 to 4, wherein the MAC CE signaling comprises a third field, the third field indicates to activate or deactivate the at least one second cell of the second RAT, and the second cell is a primary secondary cell.

6. The method according to claim 5, wherein the third field comprises N bits, N is a positive integer, the N bits indicate to activate or deactivate N primary secondary cells of the second RAT, and the N bits are in one-to-one correspondence with the N primary secondary cells.

7. An inter-radio access technology cell management method, comprising:
determining medium access control control element MAC CE signaling, wherein the MAC CE signaling indicates to manage at least one second cell of a second radio access technology RAT; and
sending the MAC CE signaling in a first cell of a first RAT.

8. The method according to claim 7, wherein the MAC CE signaling indicates to activate or deactivate the at least one second cell of the second RAT.

9. The method according to claim 8, wherein a MAC sub-header of the MAC CE signaling comprises a first field, and the first field comprises a logical channel identifier LCID field, wherein
when the LCID field is set to a first value, the LCID field indicates to activate or deactivate the at least one second cell of the second RAT.

10. The method according to claim 8, wherein a MAC sub-header of the MAC CE signaling comprises a second field, and the second field comprises an LCID field and an enhanced logical channel identifier eLCID field, wherein
when the LCID field is set to a first value and the eLCID field is set to a second value, the LCID field and the eLCID field indicate to activate or deactivate the at least one second cell of the second RAT.

11. The method according to any one of claims 7 to 10, wherein the MAC CE signaling comprises a third field, the third field indicates to activate or deactivate the at least one second cell of the second RAT, and the second cell is a primary secondary cell.

12. The method according to claim 11, wherein the third field comprises N bits, N is a positive integer, the N bits indicate to activate or deactivate N primary secondary cells of the second RAT, and the N bits are in one-to-one correspondence with the N primary secondary cells.

13. A communication apparatus, comprising a processor and an interface circuit, wherein the processor is configured to: communicate with another apparatus through the interface circuit, and perform the method according to any one of claims 1 to 6, or perform the method according to any one of claims 7 to 12.

14. A computer program product, wherein the computer program product comprises instructions, and when the instructions are run on a processor, the processor is caused to perform the method according to any one of claims 1 to 6 or perform the method according to any one of claims 7 to 12.

15. A computer-readable storage medium, wherein the storage medium stores a computer program or instructions, and when the computer program or the instructions are executed by a communication apparatus, the method according to any one of claims 1 to 6 is implemented, or the method according to any one of claims 7 to 12 is implemented.
